(19) Europäisches Patentamt
European Patent Office
Office européen des brevets

(11) **EP 3 497 169 B1**

(12) # EUROPEAN PATENT SPECIFICATION

(45) Date of publication and mention
of the grant of the patent:
**13.01.2021 Bulletin 2021/02**

(51) Int Cl.:
***C09D 5/08*** *(2006.01)*

(21) Application number: **18782064.2**

(22) Date of filing: **02.10.2018**

(86) International application number:
**PCT/EP2018/076881**

(87) International publication number:
**WO 2019/068744 (11.04.2019 Gazette 2019/15)**

(54) **CORROSION INHIBITING ADDITIVES FOR COATINGS**

KORROSIONSHEMMENDE ADDITIVE FÜR BESCHICHTUNGEN

ADDITIFS ANTICORROSION POUR REVÊTEMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2017 EP 17194405**

(43) Date of publication of application:
**19.06.2019 Bulletin 2019/25**

(73) Proprietor: **Enviral Oberflächenveredelung GmbH
14823 Niemegk (DE)**

(72) Inventors:
• **MUCIC, Nenad
10717 Berlin (DE)**
• **ROGOVITS, Rainer
14547 Fichtenwalde (DE)**

(74) Representative: **Schulz Junghans
Patentanwälte PartGmbB
Großbeerenstraße 71
10963 Berlin (DE)**

(56) References cited:
**EP-A1- 1 832 629    US-A- 5 492 696**

**Description**

Field of the invention

The present invention relates to a corrosion inhibiting additive, a method for producing the corrosion inhibiting additive and the use thereof in coatings that are either applied by dry coating or wet coating.

Background of the invention

Corrosion is an oxidation of metals that lead to their gradual destruction. To prevent corrosion, metals may be coated with polymer containing paints, lacquers or varnishes to protect the metal structures from contacting corrosive species. If the coating is damaged, corrosive species may contact the metal and oxidize its surface. Therefore, corrosion inhibitors may be added to the coating.

Corrosion inhibitors are compounds that decrease the corrosion rate of a metal by neutralizing the corrosive agents such as oxygen, hydrogen sulfide or carbon dioxide.

As the corrosion inhibitor compound is usually converted to another product upon contact with a corrosive agent, the corrosion inhibitor concentration in a coating on a metal surface decreases over time. Therefore, corrosion inhibitors may be filled into nano- or microreservoirs that release the inhibitor only upon mechanical damage or a specific trigger such as a change in local pH. A common disadvantage is the (limited) amount of inhibitor that can be filled in the reservoirs. Furthermore, trigger-sensitive additives known in the art have multiple layers and are thus laborious and cost-intensive to produce.

For example, trigger-sensitive additives disclosed in EP 1 832 629 A1 are characterized by a reservoir comprising a nanoscale solid substrate coated with a multilayered polymer or polyelectrolyte shell. The polymer or polyelectrolyte shell is doted with an inhibitor that can be released upon a change in pH.

Other known additives relate to lipid tubules having a copper-coating. Such two-component reservoirs may be filled with antimicrobial agents, herbicides or pesticides (US 5 492 696 A).

The present invention relates to inhibitors in nano- or microreservoirs that are insoluble at ambient conditions and are released from the reservoirs upon a specific trigger.

Terms and definitions

In the context of the present invention, the term "corrosion inhibitor" relates to a compound that inhibits, prevents or minimizes corrosion. Corrosion inhibitors can be categorized as follows:

- Adsorption inhibitors are chemically adsorbed (chemisorption) on the surface of the metal and form a protective thin film.
- Pickling inhibitors react with a potential corrosive component present in aqueous media to form a complex.
- Protective coating formers react with the metal atoms at the surface of the metal to form a metal-inhibitor compound, such as metal phosphate, that forms a protective layer, the so-called conversion coating.

The term "corrosion inhibitor" does not relate to anti-fouling agents, such as fungicides, antimicrobials, antibiotics, pesticides, herbicides or anthelmintics, against bio-fouling.

In the context of the present invention, the term "reservoir" relates to a tube or amorphous, porous particle with external dimensions in the nanometer to micrometer range. The cavity of the tube or the pores of the amorphous particle are suitable for the uptake of a compound such as a corrosion inhibitor.

In the context of the present invention, the term "external dimension" relates to the maximum distance of two points on the surface of an amorphous particle wherein the points are connected by a virtual straight crossing the center or the term "external dimension" relates to the length or diameter of a tube wherein the length or the diameter is determined by the outer surface of the tube wall.

In the context of the present invention, the term "pore" or "porous" is understood according to the IUPAC definition (Pure & Appl. Chem. 1994, Vol. 66, No. 8, pp. 1739-1758, particularly the paragraph "Porous solid" on page 1742 and the section "Qualitative description of a porous solid" on pages 1742 to 1743).

A pore is a cavity, channel or interstice of a solid. The cavity, channel or interstice is deeper than wide. In contrast to this, a rough surface is not porous unless it has irregularities that are deeper than they are wide.

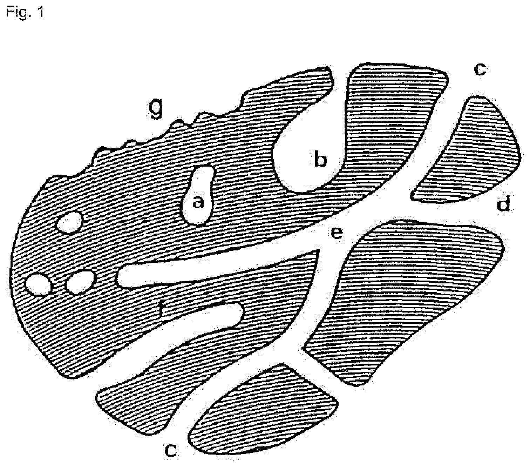

Pores may be classified according to their availability to an external fluid (see Fig. 1). From this viewpoint, a first category of pores are those totally isolated from their neighbors, as in region (a), which are related to as closed pores. They influence such macroscopic properties as bulk density, mechanical strength and thermal conductivity, but are inactive in such processes as fluid flow and adsorption of gases. Closed pores may occur in porous reservoirs according to the invention. However, as they lack any continuous channel to the external surface, they cannot be loaded with inhibitors.

Pores which have a continuous channel of communication with the external surface of the body, like (b) (c) (d) (e) and (f), are described as open pores. Some may be open only at one end (like (b) and (f)); they are then described as blind (i.e. dead-end, or saccate) pores. Others may be open at two ends (through pores), like around (e). Pores may also be classified according to their shape: they may be cylindrical (either open (c) or blind (f)), ink-bottle shaped (b), funnel shaped (d) or slit-shaped.

Reservoirs according to the present invention are particles comprising one type of open pores, for example amorphous particles comprising only dead-end pores or particles comprising one through pore that is open at two ends (tube) or reservoirs according to the present invention are particles comprising several types of open pores, e.g. a mix of dead-end and through pores. Open pores can be filled with corrosion inhibitors.

Close to, but different from porosity is the roughness of the external surface, represented around (g). A rough surface may occur at reservoirs according to the invention.

Reservoirs according to the present invention may consist of one material (e.g. $SiO_2$, $CaSiO_3$, aluminosilicate, $TiO_2$, halloysite) or a homogeneous mix of two or more materials (e.g. $Al_2O_3$ and $AlO(OH)$). Such reservoirs do not comprise distinct layers of different materials.

Cationically modified $SiO_2$ comprises a discontinuous layer of calcium ions with a patch-like morphology.

In the context of the present invention, the term "halloysite" relates to an alumosilicate clay mineral of the empirical formula $Al_2Si_2O_5(OH)_4$.

In the context of the present invention, the term "additive" relates to a reservoir filled with a corrosion inhibitor. After chemisorption and/or physisorption of the inhibitor on the surface and/or in the pores of the reservoir, neither are the pores closed using a further compound nor is the additive encapsulated using a further compound.

In the context of the present invention, the term "alkyl" refers to a linear or branched hydrocarbon chain. "$C_{1-10}$-alkyl" refers to a linear or branched hydrocarbon chain that contains 1 ($C_1$) to 10 ($C_{10}$) carbon atoms. "$C_{6-8}$-alkyl" refers to a linear or branched hydrocarbon chain that contains 6 ($C_6$) to 8 ($C_8$) carbon atoms.

In the context of the present invention, the term "release" refers to a release of an inhibitor from a reservoir upon a specific trigger. At ambient conditions, e.g. neutral pH or slightly acidic pH, ambient temperature, ionic strength below 0.1 M or absence of corrosion products, the inhibitor in the reservoir is insoluble or poorly soluble. Corrosion occurs in a wet environment and the onset of corrosion is accompanied by the formation of corrosion products, a change in pH or ionic strength. Such change in pH, ionic strength or the presence of corrosion products increases the solubility of the inhibitor. Then, the inhibitor dissolves in the liquid of the wet environment.

In the context of the present invention, the term "corrosion product" refers to oxides, hydroxides or oxyhydroxides, in particular oxides, of metals that are formed during gradual destruction of the metal or alloy by oxidation.

In the context of the present invention, the term "chemisorption" relates to a sub category of adsorption. Chemisorption may also be referred to as chemical adsorption. Chemisorption is adsorption in which the forces involved are valence forces of the same kind as those operating in the formation of chemical compounds. Chemisorption is characterized by chemical specificity, e.g. specific interaction between specific chemical moieties of the reservoir and specific chemical moieties of the inhibitor compound, to form a valence bond.

In the context of the present invention, the term "physisorption" relates to a sub category of adsorption. Physisorption may also be referred to as physical adsorption. Physisorption is adsorption in which the forces involved are intermolecular forces (van der Waals forces), and which do not involve a significant change in the electronic orbital patterns of the species involved.

Description of the invention

According to a first aspect of the invention, an additive for dry or wet coatings is provided. The additive comprises at least one corrosion inhibitor selected from 1-methyl-1 H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $C_{1-10}$-alkyl-O-$PO_3H_2$ and $Na_2MoO_4$, and a reservoir having open pores, wherein the reservoir is selected from an amorphous particle selected from $SiO_2$, cationically modified $SiO_2$, $CaSiO_3$, aluminosilicate, $TiO_2$ or a mixture of $Al_2O_3$ and $AlO(OH)$, and a halloysite tube, wherein the reservoir having open pores contains the inhibitor, and wherein the weight proportion of the corrosion inhibitor in relation to the total weight of the additive ranges from 5 % to 20 %. The additive is characterized in that the reservoir consists of one material or a homogeneous mix of two or more materials. The reservoir and the inhibitor interact directly with each other by physisorption and/or chemisorption.

Usually, a standard coating process of a metal requires first applying a primer layer followed by applying a varnish, lacquer or paint (wet coating) or a pre-treatment, usually phosphate conversion coating using phosphoric acid and a phosphate salt such as zinc phosphate, followed by powder coating (dry coating). The primer layer or phosphate conversion coating layer are applied for corrosion resistance. When additives according to the invention are added to a varnish, lacquer or paint used for wet or dry coating, the first step of applying a primer layer or a phosphate conversion coating can be omitted as the corrosion resistance is achieved by the additive. Upon damage of the coating, water may come into contact with the metal to form corrosion products. These corrosion products may induce a change in pH that triggers the release of corrosion inhibitors from the reservoir to prevent further corrosion.

For metal products that are sensitive to damage of their edges during their intended use and thus perceptible for corrosion at their edges, a "double protection" may be achieved by adding the additives according to the invention to both the primer and the subsequent coating used in wet coating. An additional primer layer comprising additives may also be applied before dry coating.

In certain embodiments, the weight proportion of the corrosion inhibitor in relation to the total weight of the additive ranges from 5 % to 18 %.

In certain embodiments, the weight proportion of the corrosion inhibitor in relation to the total weight of the additive ranges from 5 to 15 %.

In certain embodiments, the weight proportion of the corrosion inhibitor in relation to the total weight of the additive ranges from 6 % to 8 %.

In certain embodiments, the weight proportion of the corrosion inhibitor in relation to the total weight of the additive is 6 %.

Additives characterized by a relatively low proportion of the corrosion inhibitor (e.g. 6 % to 8 %) in relation to the total weight of the additive are in particular suitable for coatings that are applied by wet coating.

The inventors found that during loading the reservoir with the inhibitor, the inhibitor adsorbs on the outer surface of the reservoir and on the surface that forms the pores (inner surface). When such additives are mixed with coating formulations, components of the coating formulation contact mainly inhibitor molecules that are adsorbed at the outer surface of the reservoir. However, coating components such as in liquid paints or liquid lacquers do not sufficiently mix with additives that are characterized by inhibitors at the inner and at the outer surface of the reservoir. An additional washing step that removes inhibitors at the outer surface (mainly adsorbed by physisorption) solves this problem. Additionally washed additives are characterized by inhibitors that are adsorbed only at the inner surface of the reservoir and not at the outer surface. Such additives are miscible in liquid coating formulations such as paint or lacquer. Due to the additional washing step, the maximal loading of the reservoir is determined by the adsorption on the inner surface and thus lower compared to additives that are prepared without the additional washing step.

In certain embodiments, the weight proportion of the corrosion inhibitor in relation to the total weight of the additive ranges from 10 to 20 %.

In certain embodiments, the weight proportion of the corrosion inhibitor in relation to the total weight of the additive ranges from 15 to 20 %.

Additives characterized by a relatively high proportion of the corrosion inhibitor in relation to the total weight of the additive are in particular suitable for coatings that are applied by dry coating.

In contrast to the additives suitable for wet coating described above, additives used for dry coating may contain inhibitor molecules adsorbed not only at the inner surface but also at the outer surface of the reservoir. Thus, the maximal loading of the reservoir is determined by both adsorption of the inhibitor on the inner and on the outer surface. The inhibitors can be adsorbed by chemi- and/or physisorption.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $Na_2MoO_4$ and alkyl phosphate, in particular $C_{1-10}$-alkyl-O-$PO_3H_2$, more particular $C_{6-8}$-O-$PO_3H_2$.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $C_{1-10}$-alkyl-O-$PO_3H_2$, in particular $C_{6-8}$-O-$PO_3H_2$, and $Na_2MoO_4$.

In certain embodiments, the corrosion inhibitor is selected from the group comprising $K_2TiF_6$, $(NH_4)_2TiF_6$ and $Na_2MoO_4$. These inhibitors are in particular suitable for additives used in dry coatings. The inhibitors may be adsorbed at the outer and inner surface of the reservoir.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel and $C_{1-10}$-alkyl-O-$PO_3H_2$. These inhibitors are in particular suitable for additives used in wet coatings. As described above, the preparation of additives for wet coatings involved an additional washing step for the removal of inhibitors bound to the outer surface of the reservoir. Thus, the additives are characterized by inhibitors bound predominately to the inner surface only. The inhibitors are mainly adsorbed by chemisorption.

In certain embodiments, the corrosion inhibitor is 1-methyl-1H-benzotriazole.

In certain embodiments, the corrosion inhibitor is selected from the group comprising 8-hydroxyquinoline, tris(8-hydroxyquinolinato)aluminium, bis(8-hydroxyquinolinato)barium, bis(8-hydroxyquinolinato) nickel.

In certain embodiments, the corrosion inhibitor is selected from the group comprising $K_2TiF_6$ and $(NH_4)_2TiF_6$.

In certain embodiments, the corrosion inhibitor is selected from the group comprising alkyl-O-PO$_3$H$_2$ and Na$_2$MoO$_4$.

In certain embodiments, the corrosion inhibitor is selected from the group comprising C$_{1-10}$-alkyl-O-PO$_3$H$_2$, in particular C$_{6-8}$-alkyl-O-PO$_3$H$_2$, and Na$_2$MoO$_4$.

In certain embodiments, the external dimensions of the reservoir are in the nanometer to micrometer range.

In certain embodiments, the external dimensions of the reservoir ranges from 10 nm to 50 $\mu$m.

In certain embodiments, the external dimension of an amorphous particle ranges from 250 nm to 30 $\mu$m, in particular from 3 $\mu$m to 30 $\mu$m. Here, the external dimension relates to the maximum distance of two points on the surface of an amorphous particle wherein the points are connected by a virtual straight crossing the center of the particle.

In certain embodiments, the amorphous particle is porous. The pores have an average diameter ranging from 5 nm to 50 nm, in particular 10 nm to 40 nm.

In certain embodiments, the external dimension of an amorphous particle ranges from 250 nm to 30 $\mu$m, in particular from 3 $\mu$m to 30 $\mu$m and the amorphous particle is porous.

The external dimensions of a tube are the diameter and the length, wherein the length or the diameter is determined by the outer surface of the tube wall.

In certain embodiments, the outside diameter of the tube is between 20 nm and 100 nm, in particular 50 nm.

In certain embodiments, the inside diameter of the tube ranges from 10 nm to 50 nm, in particular 15 nm.

In certain embodiments, the outside diameter of the tube is between 20 nm and 100 nm, in particular 50 nm, and the inside diameter of the tube is between 10 nm and 50 nm, in particular 15 nm.

In certain embodiment, the length of the tube is between 250 nm and 2 $\mu$m.

In certain embodiments, the external dimensions of the reservoir are between 20 nm and 50 $\mu$m.

In certain embodiments, the external dimensions of the reservoir are between 50 nm and 30 $\mu$m.

In certain embodiments, the corrosion inhibitor is released from the reservoir upon a specific trigger. The trigger effects the electrostatic intermolecular forces (physisorption) and/or valence forces (chemisorption). Upon the specific trigger, the solubility of the corrosion inhibitor is increased and the inhibitor is released from the reservoir.

In certain embodiments, the specific trigger increases the solubility of the corrosion inhibitor. At ambient conditions, the solubility of the corrosion inhibitor is below $2,5x10^1$ mg/ml. Upon a specific trigger, the solubility increases above $2,5x10^1$ mg/ml.

The release occurs in a wet environment such as water, condensed air humidity or an aqueous liquid.

In certain embodiments, the specific trigger is a change in temperature, ionic strength or pH or the presence of corrosion products.

The release might be initiated by one trigger or a combination of at least two triggers.

In certain embodiments, the corrosion inhibitor is released from the reservoir upon a change in temperature, in particular upon a change from ambient temperature to a temperature between 70 °C and 150 °C. Ambient temperature ranges from 0° to 45 °C, in particular 10°C to 30 °C, more particularly 15°C to 25 °C.

In certain embodiments, the adsorption inhibitor is released from the reservoir upon a change in temperature, in particular upon a change from ambient temperature to a temperature between 70 and 150 °C.

In certain embodiments, 1-methyl-1H-benzotriazole, 8-hydroxyquinoline, tris(8-hydroxyquinolinato) aluminium, bis(8-hydroxyquinolinato)barium, bis(8-hydroxyquinolinato)nickel is released from the reservoir upon a change in temperature, in particular upon a change from ambient temperature to a temperature between 70 and 150 °C.

In certain embodiments, the corrosion inhibitor is released from the reservoir upon a change in ionic strength or pH.

In certain embodiments, the corrosion inhibitor is released from the reservoir upon a change in ionic strength, in particular upon a change from an ionic strength below 1 M to an ionic strength equal to or higher than 1 M. The ionic strength is based on the concentration of a binary electrolyte.

In certain embodiments, the pickling inhibitor is released from the reservoir upon a change in ionic strength, in particular upon a change from an ionic strength below 1 M to an ionic strength equal to or higher than 1 M. In certain embodiments, K$_2$TiF$_6$ or (NH$_4$)$_2$TiF$_6$ is released from the reservoir in particular upon a change in ionic strength, in particular upon a change from an ionic strength below 1 M to an ionic strength equal to or higher than 1 M.

In certain embodiments, the corrosion inhibitor is released from the reservoir upon a change in pH.

In certain embodiments, the corrosion inhibitor is released from the reservoir upon a change from a neutral pH (pH 6-8) to an acidic pH (pH< 6) or to an alkaline pH (pH > 8).

In certain embodiments, the corrosion inhibitor is released from the reservoir upon a change from a neutral pH (pH 6-8) to an acidic pH (pH< 5) or to an alkaline pH (pH > 9).

In certain embodiments, the corrosion inhibitor is released from the reservoir upon a change from a neutral pH (pH 6-8) to an acidic pH (pH< 6), in particular to pH < 5.

In certain embodiments, the corrosion inhibitor is released from the reservoir upon a change from a neutral pH (pH 6-8) to an alkaline pH (pH > 8), in particular to pH > 9.

Upon a change in pH, the solubility of the inhibitor increases. Subsequently, the inhibitor is released out of the reservoir.

In certain embodiments, 1-methyl-1H-benzotriazole, 8-hydroxyquinoline; tris(8-hydroxyquinolinato) aluminium, bis(8-hydroxyquinolinato)barium, bis(8-hydroxyquinolinato)nickel or $NaMoO_4$ is released from the reservoir upon a change in pH.

In certain embodiments, the reservoir is selected from an amorphous particle and a tube.

In certain embodiments, the reservoir is selected from $SiO_2$, cationically modified $SiO_2$, $CaSiO_3$, aluminosilicate, $TiO_2$ and a mixture of $Al_2O_3$ and $AlO(OH)$, and halloysite.

In certain embodiments, the reservoir is an amorphous particle.

In certain embodiments, the amorphous particle is selected from $SiO_2$, cationically modified $SiO_2$, $CaSiO_3$, aluminosilicate, $TiO_2$ and a mixture of $Al_2O_3$ and $AlO(OH)$.

In certain embodiments, the reservoir is a tube.

In certain embodiments, the reservoir is a halloysite.

Reservoirs comprising calcium and /or transition metals are better suited for chemisorption.

Additives that are characterized by reservoirs and inhibitors interacting by chemisorption are preferred.

In certain embodiments, the additive is characterized in that the reservoir and the corrosion inhibitor interact predominantly by chemisorption.

According to a second aspect of the invention, a use of the additive according to the first aspect of the invention in a coating, in particular in a varnish, lacquer, paint or primer, is provided.

In certain embodiments, the weight proportion of the additive in relation to the weight proportion of the coating ranges between 1 wt% and 10 wt%.

In certain embodiments, the weight proportion of the additive in relation to the weight proportion of the coating ranges between 3 wt% to 5 wt%.

In certain embodiments, the additive is added to a powder used for powder coating and the weight proportion of the inhibitor in relation to the total weight of the additive ranges from 10 to 20 %, in particular from 15 to 20 %.

In certain embodiments, the additive is mixed with polymers that cure at a temperature ranging from 130 °C to 200 °C.

In certain embodiments, the additive is mixed with polymers that cure at a temperature ranging from 130 °C to 150 °C or from 160 °C to 200 °C.

In certain embodiments, the additive is mixed with polymers that cure at a temperature ranging from 130 °C to 150 °C.

In certain embodiments, the additive is mixed with polymers that cure at a temperature ranging from 160 °C to 200 °C.

In certain embodiments, the additive is mixed with epoxy or polyester based polymers.

In certain embodiments, the additive is mixed with epoxy based polymers.

In certain embodiments, the additive is mixed with polyester based polymers.

In certain embodiments, the additive is added to a coating liquid used for wet coating and the weight proportion of the inhibitor in relation to the total weight of the additive ranges from 5 % to 18 %, in particular from 5 to 15 %, more particularly from 6 % to 8 %.

In certain embodiments, the additive is mixed with thermosets.

In certain embodiments, the additive is mixed with polymers that cure at a temperature ranging from 130 °C to 200 °C.

In certain embodiments, the additive is mixed with polymers that cure at a temperature ranging from 130 °C to 150 °C or from 160 °C to 200 °C.

In certain embodiments, the additive is mixed with polymers that cure at a temperature ranging from 130 °C to 150 °C.

In certain embodiments, the additive is mixed with polymers that cure at a temperature ranging from 160 °C to 200 °C.

In certain embodiments, the additive is mixed with epoxy, polyester or polyurethane based polymers.

In certain embodiments, the additive is mixed with epoxy based polymers.

In certain embodiments, the additive is mixed with polyester based polymers.

In certain embodiments, the additive is mixed with polyurethane based polymers.

Brief description of the figures

Fig. 1 shows a schematic cross-section of a porous solid. (a) indicates a pore that is isolated from neighbor pores; (b) and (f) indicate dead-end open pores; (c) indicates a cylindrical open pore, (d) indicates a funnel shaped pore, (e) indicates the inner part of pores (c) and (d) that have more than one open end; (g) indicates a rough surface (Pure & Appl. Chem. 1994, Vol. 66, No. 8, pp. 1739-1758).

Examples

*Example 1: Production of additives for wet coatings using amorphous particles*

(A) Preparation of 1.4 %w aqueous solution of Potassium hexafluorotitanate(IV) (Mw = 240.05 g/mol) at pH 7. The solution was heated up to boiling temperature in order to obtain a transparent solution.

(B) Preparation of nanocapsules with water-soluble inhibitor (Potassium hexafluorotitanate(IV)).
17.37 %w of amorphous silica particles was added to the solution (A) at boiling temperature. The obtained suspension was mixed for 60 min at boiling conditions in order to fill the pores of the amorphous silica particles with dissolved Potassium hexafluorotitanate(IV). Afterwards, the suspension was cooled down to room temperature. Potassium hexafluorotitanate(IV) interacts with the active groups of silica particles and stays bonded by ionic and steric interactions.

(C) Preparation of powder additive for wet coatings.
The cooled suspension (B) was filtered and the obtained precipitate was additionally washed by Milli-Q water. The washed precipitate was dried at 200 °C until the water content is reduced to 0 %. The dried precipitate was milled in order to obtain fine powder with agglomerates of up to 2 μm size. The final yield of the additives production was 92.6 %. Concentration of encapsulated Potassium hexafluorotitanate(IV) was 5.60 %w. *Example 2: Production of additives for wet coatings using tubes*

The additive production of example 2 was performed in the same way as example 1, except that Halloysite nanotubes instead of amorphous silica particles were added to the solution (A). In this case the size of the additive agglomerates varied from 10 μm to 15 μm.

*Example 3: Production of additives for dry coatings using amorphous particles*

The additive production of example 3 was performed in the same way as example 1, except that 4 %w, instead of 1.4 %w, Potassium hexafluorotitanate(IV) (Mw = 240.05 g/mol) was added to the solution (A). Concentration of encapsulated Potassium hexafluorotitanate(IV) was 18 %w.

*Example 4: Production of additives for dry coating using tubes*

(A) *Preparation of inhibitor aqueous solution.*
4 %w of Potassium hexafluorotitanate(IV) (Mw = 240.05 g/mol) was prepared with Milli-Q water at pH 7. Potassium hexafluorotitanate(IV) was dissolved by heating the solution up to 100 °C in order to obtain a transparent solution.

(B) *Preparation of encapsulated nanocapsules with water-soluble inhibitor (Potassium hexafluorotitanate(IV)).*
17.37 %w of Halloysite nanotubes were added to solution (A) at boiling temperature. The obtained suspension was mixed for 60 min at boiling conditions in order to fill the inner space of Halloysite nanotubes with dissolved Potassium hexafluorotitanate(IV). Afterwards, the suspension was cooled down to room temperature. Potassium hexafluorotitanate(IV) interacts with the active groups of Halloysite nanotubes and stays bonded by ionic and steric interactions.

(C) *Preparation of powder additive for dry coatings.*
The cooled suspension (B) was further processed by a spray dryer with a 0.5 mm nozzle. The spray dryer temperature was set up to 245°C or 120 °C for pre- or after cyclone temperatures, respectively. The suspension loading to the spray dryer was done by a peristaltic pump, set to a 10 rpm rate. The yielded additive agglomerates are 11 μm of size, while the additive side products are 35 μm of size. The final yield of the additive production was 85.79 %.

The weight proportion of the inhibitor in relation to the additive is calculated according to equation (1),

$$c_{inh,3} = \frac{m_{inh,0} - m_{inh,1} - m_{inh,2}}{m_{tot,3}}$$

(1),

Cinh,3 = weight proportion of the inhibitor in relation to the weight of the additive

$m_{inh,0}$ = weight of the inhibitor before filtration and washing

$m_{inh,1}$ = weight of the inhibitor after filtration

minh,2 = weight of the inhibitor after washing

mtot,3 = total weight of the additive

*Test of additives*

The additives were tested in a salt spray assay according to DIN EN ISO 9227. The results are summarized in table 1. The test was performed using wet coatings.

Table 1: Results of the salt spray assay according to DIN EN ISO 9227

| Reservoir | size in nm | Inhibitor | P, [wt %] | Type of steel | DFT [$\mu$m] | UWtime, [mm] | UWtime standard (DTF) [mm] |
|---|---|---|---|---|---|---|---|
| SiO$_2$ | 250 | MeBTA | 5 | SAE 1008/1010 | 58 | UW505 = 13,57 | k.A. |
| SiO$_2$ | 400 | 8HQ | 3 | DC04B | 99 | UW507 = 0,6 | UW507 (55$\mu$m) = 1,0 |
| SiO$_2$ | 400 | K$_2$TiF$_6$ | 4,6 | 4310 | 79 | UW573 = 1,4 | UW573 (65 $\mu$m) = 2,8 |
| SiO$_2$ | 400 | K$_2$TiF$_6$ | 4,6 | DC04B | 63 | UW500 = 1,3 | UW500 (59 $\mu$m) = 1,6 |
| SiO$_2$ | 400 | K$_2$TiF$_6$ | 4,5 | DC04B | 40 | UW745 = 1,63 | UW745 (48 $\mu$m) = 2,0 |
| SiO$_2$ cat. mod. | 3100 | (NH$_4$)$_2$TiF$_6$ | 5 | DC04B | 103 | UW1000 = 2,2 | UW1000 (85$\mu$m) = 2,5 |
| SiO$_2$ cat. mod. | 3100 | K$_2$TiF$_6$+BaQ$_2$ | 4,9 | DC04B | 55 | UW766 = 2,33 | UW766 (45 $\mu$m) = 2,7 |
| SiO$_2$ cat. mod. | 3100 | K$_2$TiF$_6$+NiQ$_2$ | 4,9 | DC04B | 63 | UW766 = 1,32 | UW766 (45 $\mu$m) = 2,7 |
| SiO$_2$ cat. mod. | 3100 | K$_2$TiF$_6$ | 4,7 | DC04B | 49 | UW766 = 1,52 | UW766 (45 $\mu$m) = 2,7 |
| SiO$_2$ cat. mod. | 3100 | K$_2$TiF$_6$ | 4,7 | DC04B | 40 | UW800 = 1,52 | UW800 (34 $\mu$m) = 2,83 |
| SiO$_2$ cat. mod. | 3100 | K$_2$TiF$_6$ | 5 | DC04B | 78 | UW500 = 1,0 | UW500 (59 $\mu$m) = 1,6 |
| SiO$_2$ cat. mod. | 3100 | K$_2$TiF$_6$ | 4,7 | 4310 | 82 | UW573 = 1,2 | UW573 (65 $\mu$m) = 2,8 |
| SiO$_2$ cat. mod. | 3100 | K$_2$TiF$_6$ | 4,7 | 4310 | 118 | UW573 = 1,4 | UW573 (65 $\mu$m) = 2,8 |
| SiO$_2$ cat. mod. | 3100 | K$_2$TiF$_6$ | 4,7 | DC04B | 40 | UW745 = 1,9 | UW745 (48 $\mu$m) = 2,0 |
| Alumosilicate | 2000x 50 | K$_2$TiF$_6$+NiQ$_2$ | 4,9 | DC04B | 58 | UW766 = 1,63 | UW766 (45 $\mu$m) = 2,7 |

(continued)

| Reservoir | size in nm | Inhibitor | P, [wt %] | Type of steel | DFT [μm] | UWtime, [mm] | UWtime standard (DTF) [mm] |
|---|---|---|---|---|---|---|---|
| Alumosilicate | 2000x 50 | $K_2TiF_6$ | 4,7 | DC04B | 54 | UW766 = 1,1 | UW766 (45 μm) = 2,7 |
| Alumosilicate | 2000x 50 | $K_2TiF_6$ | 4,6 | 4310 | 90 | UW573 = 1,8 | UW573 (65 μm) = 2,8 |
| Alumosilicate | 2000x 50 | $K_2TiF_6$ | 4,6 | DC04B | 66 | UW500 = 1,4 | UW500 (59 μm) = 1,6 |
| Alumosilicate | 2000x 50 | $K_2TiF_6$ | 4,5 | DC04B | 37 | UW800 = 2,27 | UW800 (34 μm) = 2,83 |
| Alumosilicate | 2000x 50 | $K_2TiF_6$ | 4 | DC04B | 40 | UW800 = 1,52 | UW800 (34 μm) = 2,83 |
| Alumosilicate | 2000x 50 | $K_2TiF_6$ | 4,6 | DC04B | 33 | UW745 = 1,37 | UW745 (48 μm) = 2,0 |
| $Al_2O_3$/ AlO (OH) | 25000 | 8HQ | 4,3 | DC04B | 41 | UW800 = 2,2 | UW800 (34 μm) = 2,83 |
| $TiO_2$ | 400 | $Na_2MoO_4$ | 3 | A2024 (Alu) | 80 | UW400 = 2,0 | UW400 (77) = 3,1 |
| $TiO_2$ | 400 | Korantin SMK | 3 | A2024 (Alu) | 76 | UW400 = 2,6 | UW400 (77) = 3,1 |

*P: Weight proportion of the additive in relation to the weight of the wet coating; DFT: Dry film thickness; UWtime: The subsurface corrosion underneath the coating (UW) is measured in mm, the time indicates the hours of salt spraying, for example UW507 = 0.6 means that 0.6 mm subsurface corrosion was measured after 507 hours of salt spraying; cat. mod.: cationically modified; MeBTA: 1-methyl-1H-benzotriazole; $AlQ_3$: tris(8-hydroxyquinolinato)aluminium; 8HQ: 8-hydroxyquinoline; $BaQ_2$: bis(8-hydroxyquinolinato)barium; NiQ2: bis(8-hydroxyquinolinato)nickel; Korantin SMK: Alkyl-phosphate; standard: dried liquid coating without additive*

*Example 5: Test of additives for powder coatings*

The results of the neutral salt spray (NSS) tests according to international standard ISO 9227 (see Table 2) showed that the protection efficiency of an one-layer powder coating (polyester topcoat) containing additives according to the invention (cationically modified $SiO_2$ halloysites loaded with $K_2TiF_6$) is comparable or even slightly better than the protection efficiency of a standard two-layer powder coating (epoxy primer and polyester topcoat). This enables the direct replacement of two-layer conventional powder coatings with one-layer ones containing an additive according to the invention.

On the industrial level, this replacement leads to the maintenance or slight improvement of anticorrosive coating performance and promises numerous benefits connected with the elimination of one production cycle related to the application of the second coating layer. Reduction of coating steps leads to essential savings of materials, energy, processing and other costs.

Table 2: Results of the salt spray assay according to DIN EN ISO 9227

| Reservoir | size in nm | Inhibitor | P, [wt%] | Type of steel | DFT [μm] | UWtime, [mm] | UWtime standard single coat (DTF) [mm] | UWtime standard double coat (DTF) [mm] |
|---|---|---|---|---|---|---|---|---|
| $SiO_2$ cat. mod. | 800 | $K_2TiF_6$ | 5 | DC04B | 102 | UW760 = 0,8 | UW760 (103μm) = 1,6 | UW760 (207μm) = 1,1 |

(continued)

| Reservoir | size in nm | Inhibitor | P, [wt%] | Type of steel | DFT [μm] | UWtime, [mm] | UWtime standard single coat (DTF) [mm] | UWtime standard double coat (DTF) [mm] |
|---|---|---|---|---|---|---|---|---|
| $SiO_2$ cat. mod. | 800 | $K_2TiF_6$ | 5 | DC04B | 102 | UW1270 = 0,9 | UW1270 (103μm) = 5,1 | UW1270 (207μm) = 2,0 |

*P: Weight proportion of the additive in relation to the weight of the wet coating; DFT: Dry film thickness; UWtime: The subsurface corrosion underneath the coating (UW) is measured in mm, the time indicates the hours of salt spraying, for example UW760 = 1.6 means that 1.6 mm subsurface corrosion was measured after 760 hours of salt spraying; cat. mod.: cationically modified*

## Claims

1. An additive for dry or wet coatings wherein the additive comprises

   - at least one corrosion inhibitor selected from 1-methyl-1H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $C_{1-10}$-alkyl-O-$PO_3H_2$ and $Na_2MoO_4$, and
   - a porous reservoir having open pores, wherein the porous reservoir is selected from

     an amorphous particle selected from $SiO_2$, cationically modified $SiO_2$, $CaSiO_3$, aluminosilicate, $TiO_2$ or a mixture of $Al_2O_3$ and $AlO(OH)$, and
     a halloysite tube,

   wherein the porous reservoir contains the inhibitor,
   the weight proportion of the corrosion inhibitor in relation to the total weight of the additive ranges from 5 % to 20 %,
   **characterized in that**
   the reservoir consists of one material or a homogeneous mix of two or more materials.

2. The additive according to claim 1, wherein the weight proportion of the corrosion inhibitor in relation to the total weight of the additive ranges from 5 % to 18 %, in particular from 5 to 15 %, more particularly from 6 % to 8 %.

3. The additive according to claim 1, wherein the weight proportion of the corrosion inhibitor in relation to the total weight of the additive ranges from 10 to 20 %, in particular from 15 to 20 %.

4. The additive according to any one of the preceding claims, wherein the external dimensions of the reservoir are in the nanometer to micrometer range, in particular between 10 nm and 50 μm, more particularly between 50 nm and 30 μm.

5. The additive according to any one of the preceding claims, wherein the corrosion inhibitor is released from the reservoir upon a specific trigger, in particular upon a change in temperature, ionic strength or in pH or the presence of corrosion products.

6. The additive according to any one of the preceding claims, wherein the additive is **characterized in that** the reservoir and corrosion inhibitor interact predominantly by chemisorption.

7. Use of the additive according to any one of the preceding claims in a coating, in particular in a varnish, lacquer, paint or primer.

8. The use according to claim 7, wherein the weight proportion of the additive in relation to the weight proportion of the coating ranges between 1 wt% and 10wt%, in particular 3 wt% to 5 wt%.

9. The use according to claim 7, wherein the additive is added to a powder used for powder coating and the weight proportion of the inhibitor in relation to the total weight of the additive ranges from 10 to 20 %, in particular from 15 to 20 %.

10. The use according to any one of the preceding claims 7 to 8, wherein the additive is mixed with polymers that cure at a temperature ranging from 130 °C to 200 °C, in particular epoxy or polyester based polymers.

11. The use according to claim 7, wherein the additive is added to a coating liquid used for wet coating and the weight proportion of the inhibitor in relation to the total weight of the additive ranges from 5 % to 18 %, in particular from 5 to 15 %, more particularly from 6 % to 8 %.

12. The use according to any one of the preceding claims 7 or 10, wherein the additive is mixed with thermosets, in particular polymers that cure at a temperature ranging from 130 °C to 200 °C, more particularly epoxy, polyester or polyurethane based polymers.

**Patentansprüche**

1. Ein Additiv für Trocken- oder Nassbeschichtungen, wobei das Additiv umfasst

    - mindestens einen Korrosionsinhibitor, ausgewählt aus 1-Methyl-1H-benzotriazol, 8-Hydroxychinolin, Tris(8-hydroxychinolinato)aluminium, Bis(8-hydroxychinolinato)barium, Bis(8-hydroxychinolinato)nickel, $K_2TiF_6$, $(NH_4)_2TiF_6$, $C_{1-10}$-Alkyl-O-$PO_3H_2$ und $Na_2MoO_4$, und
    - ein poröses Reservoir mit offenen Poren, wobei das poröse Reservoir ausgewählt ist aus

       einem amorphen Partikel ausgewählt aus $SiO_2$, kationisch modifiziertem $SiO_2$, $CaSiO_3$, Aluminosilikat, $TiO_2$ oder einer Mischung aus $Al_2O_3$ und $AlO(OH)$, und
       einem Halloysit-Tube,

    wobei das poröse Reservoir den Inhibitor enthält,
    der Gewichtsanteil des Korrosionsinhibitors im Verhältnis zum Gesamtgewicht des Additivs im Bereich von 5 % bis 20 % liegt,
    **dadurch gekennzeichnet, dass**
    das Reservoir aus einem Material oder einer homogenen Mischung aus zwei oder mehr Materialien besteht.

2. Das Additiv nach Anspruch 1, wobei der Gewichtsanteil des Korrosionsinhibitors im Verhältnis zum Gesamtgewicht des Additivs im Bereich von 5 % bis 18 %, insbesondere von 5 bis 15 %, weiter insbesondere von 6 % bis 8 %, liegt.

3. Das Additiv nach Anspruch 1, wobei der Gewichtsanteil des Korrosionsinhibitors im Verhältnis zum Gesamtgewicht des Additivs im Bereich von 10 bis 20 %, insbesondere von 15 bis 20 %, liegt.

4. Das Additiv nach einem der vorhergehenden Ansprüche, wobei die äußeren Abmessungen des Reservoirs im Nanometer- bis Mikrometerbereich liegen, insbesondere zwischen 10 nm und 50 μm, weiter insbesondere zwischen 50 nm und 30 μm.

5. Das Additiv nach einem der vorhergehenden Ansprüche, wobei der Korrosionsinhibitor bei einem bestimmten Auslöser, insbesondere bei einer Änderung der Temperatur, der Ionenstärke oder des pH-Wertes oder durch Auftreten von Korrosionsprodukten, aus dem Reservoir freigesetzt wird.

6. Das Additiv nach einem der vorhergehenden Ansprüche, wobei das Additiv **dadurch gekennzeichnet ist, dass** das Reservoir und der Korrosionsinhibitor überwiegend durch Chemisorption wechselwirken.

7. Verwendung des Additivs nach einem der vorhergehenden Ansprüche in einer Beschichtung, insbesondere in einem Firnis, einem Lack, einer Farbe oder einer Grundierung.

8. Die Verwendung nach Anspruch 7, wobei der Gewichtsanteil des Additivs im Verhältnis zum Gewichtsanteil der Beschichtung zwischen 1 Gew.-% und 10 Gew.-%, insbesondere 3 Gew.-% bis 5 Gew.-%, liegt.

9. Die Verwendung nach Anspruch 7, wobei das Additiv einem Pulver, das zur Pulverbeschichtung verwendet wird, zugesetzt wird und der Gewichtsanteil des Inhibitors im Verhältnis zum Gesamtgewicht des Additivs im Bereich von 10 bis 20 %, insbesondere von 15 bis 20 %, liegt.

**10.** Die Verwendung nach einem der vorhergehenden Ansprüche 7 bis 8, wobei das Additiv mit Polymeren vermischt wird, die bei einer Temperatur im Bereich von 130 °C bis 200 °C aushärten, insbesondere mit Polymeren auf Epoxid- oder Polyesterbasis.

**11.** Die Verwendung nach Anspruch 7, wobei das Additiv einer Beschichtungsflüssigkeit, die für die Nassbeschichtung verwendet wird, zugesetzt wird und der Gewichtsanteil des Inhibitors im Verhältnis zum Gesamtgewicht des Additivs im Bereich von 5 % bis 18 %, insbesondere von 5 bis 15 %, weiter insbesondere von 6 % bis 8 %, liegt.

**12.** Die Verwendung nach einem der vorhergehenden Ansprüche 7 oder 10, wobei das Additiv mit Duroplasten, insbesondere Polymeren, die bei einer Temperatur im Bereich von 130 °C bis 200 °C aushärten, weiter insbesondere Polymeren auf Epoxid-, Polyester- oder Polyurethanbasis, vermischt wird.

**Revendications**

**1.** Additif pour revêtement par voie sèche ou humide, l'additif comprenant

- un au moins inhibiteur de la corrosion sélectionné parmi les suivants :
1-méthyl-1H-benzotriazole, 8-hydroxyquinoléine, tris(8-hydroxyquinoléinato)aluminium, bis(8-hydroxyquinoléinato)baryum, bis(8-hydroxyquinoléinato)nickel, $K_2TiF_6$, $(NH_4)_2TiF_6$, (alkyle en $C_{1-10}$)-O-$PO_3H_2$ et $Na_2MoO_4$ et
- un réservoir poreux ayant des pores ouverts, le réservoir poreux étant sélectionné parmi

une particule amorphe sélectionnée parmi le $SiO_2$, un $SiO_2$ cationiquement modifié, le $CaSiO_3$, un aluminosilicate, le $TiO_2$ ou un mélange de $Al_2O_3$ et de AlO(OH) et
un tube d'halloysite,

où le réservoir poreux contient l'inhibiteur,
la proportion en poids de l'inhibiteur de corrosion rapportée au poids total de l'additif va de 5 % à 20 %,
**caractérisé en ce que**
le réservoir est constitué d'un matériau ou d'un mélange homogène de deux ou plusieurs matériaux.

**2.** Additif selon la revendication 1, où la proportion en poids de l'inhibiteur de corrosion rapportée au poids total de l'additif va de 5 % à 18 %, en particulier de 5 à 15 %, plus particulièrement de 6 % à 8 %.

**3.** Additif selon la revendication 1, où la proportion en poids de l'inhibiteur de corrosion rapportée au poids total de l'additif va de 10 à 20 %, en particulier de 15 à 20 %.

**4.** Additif selon l'une quelconque des revendications précédentes, où les dimensions extérieures du réservoir sont dans la plage nanométrique à micrométrique, en particulier entre 10 $\mu$m et 50 $\mu$m, plus particulièrement entre 50 $\mu$m et 30 $\mu$m.

**5.** Additif selon l'une quelconque des revendications précédentes, où l'inhibiteur de corrosion est libéré du réservoir lors d'un événement déclencheur spécifique, en particulier lors d'un changement de la température, de la force ionique ou du pH ou en la présence de produits de corrosion.

**6.** Additif selon l'une quelconque des revendications précédentes, où l'additif est **caractérisé en ce que** le réservoir et l'inhibiteur de corrosion interagissent en prédominance par chimiosorption.

**7.** Utilisation de l'additif selon l'une quelconque des revendications précédentes dans un revêtement, en particulier dans un vernis, une laque, une peinture ou une couche de fond.

**8.** Utilisation selon la revendication 7, où la proportion en poids de l'additif rapportée à la proportion en poids du revêtement va de 1 % en poids à 10 % en poids, en particulier de 3 % en poids à 5 % en poids.

**9.** Utilisation selon la revendication 7, où l'additif est ajouté à une poudre utilisée pour le revêtement par poudre et où la proportion en poids de l'inhibiteur rapportée au poids total de l'additif va de 10 à 20 %, en particulier de 15 à 20 %.

**10.** Utilisation selon l'une quelconque des revendications 7 à 8 précédentes, où l'additif est mélangé à des polymères qui durcissent à une température qui va de 130 °C à 200 °C, en particulier des polymères à base d'époxy ou de polyester.

11. Utilisation selon la revendication 7, où l'additif est ajouté à un liquide de revêtement utilisé pour le revêtement par voie humide et où la proportion en poids de l'inhibiteur rapportée au poids total de l'additif va de 5 % à 18 %, en particulier de 5 à 15 %, plus particulièrement de 6 % à 8 %.

12. Utilisation selon l'une quelconque des revendications 7 à 10 précédentes, où l'additif est mélangé à des thermodurcissables, en particulier à des polymères qui durcissent à une température qui va de 130 °C à 200 °C, plus particulièrement à des polymères à base d'époxy, de polyester ou de polyuréthane.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1832629 A1

- US 5492696 A

**Non-patent literature cited in the description**

- *Pure & Appl. Chem.,* 1994, vol. 66 (8), 1739-1758